# EUROPEAN PATENT APPLICATION

(11) **EP 1 716 798 A2**
(43) Date of publication of application: **02.11.2006**
(21) Application number: 06005358.4
(22) Date of filing: 16.03.2006
(51) Int. Cl.: A47J 31/44

(54) **Device for the formation of froth in a milk-based drink**

(30) Priority: 27.04.2005 IT MI20050749
(71) Applicant: De'Longhi SpA, 31100 Treviso (IT)
(72) Inventor: Marconi, Gian Carlo, 31057 Silea (Treviso) (IT)
(74) Representative: Rapisardi, Mariacristina

(57) **Abstract**

The device for the formation of froth in a milk-based drink comprises a tubular element (3) which may be fit in a removable manner on a steam dispenser nozzle (2) and cooperate with it to define an air intake line (4) inside the tubular element (3), and scraping means (5) of the air intake line (4) which operate when the tubular element (3) is fit and/or removed.

## Description

The present invention relates to the technical field of the devices and processes for the formation of froth in a milk-based drink.

As is presently known, in the devices for domestic use for the preparation of coffee, cappuccinos and the like, a steam dispenser is present which is adapted to mix the milk with the air in order to confer the mixture thus obtained, through steam, an emulsion of milk, air and steam which confers a soft froth above all for the preparation of cappuccinos and the like.

This device, which is called emulsifier below, is presently realised with different structures and with different functioning modes adapted to obtain an optimisation of the mixture of milk with air and, consequently, an optimisation of the emulsion of milk, air and steam, and therefore an optimisation of the froth which is desired in the milk-based drink.

Among the drawbacks which the emulsifiers of known type present, it should be noted that which is due to the difficulty of cleaning the same, which with the passage of time damages its performance.

In particular, sediments are accumulated along the air feed line, which progressively obstruct the line.

Moreover, normally the mixture of the mixing of the milk with the air occurs in the same zone in which there is the addition of steam, which causes the emulsion of the milk with the air and steam and therefore the froth.

From one such situation, it may be derived that either the mixture of milk and air or emulsion of the two components with the steam may affect each other, causing a decline of the quantity and quality of froth produced. Furthermore, normally the mixing of milk and air occurs through the intake within a tubular element of the two products in a vorticose and irregular manner, or through narrow, reduced passes between said products in a laminar, but slowed and obstructed manner.

In this case, therefore, the vorticose and/or irregular and/or slowed and/or obstructed/deviated air flow may contribute to cause a decline of the froth quality which may be obtained when steam is added to the mixture.

It should also be underlined that many of these devices have the dispensing of the emulsion, defined as the milk with the air and steam, with direction substantially radial to the axis of the emulsifier's tubular element, causing losses of load during the passage of the emulsion into a relatively small exit hole, which always damage, as already said, the quality and the quantity of the froth which one desires to obtain.

In this situation, the technical task at the base of the present invention is to remedy the above described drawbacks of the prior art.

In the scope of this technical task, an important object of the present invention is to conceive a device for the formation of froth in a milk-based drink which permits preserving the hygiene and particularly the cleanliness of the air feed line so to maintain optimal performances over time.

Another object of the present invention is that of automatically maintaining clean the air intake line of a device for the formation of froth in a milk-based drink, so to ensure optimal performances over time.

Another object of the present finding is that of providing a device for the formation of froth in a milk-based drink which permits optimising the milk and air mixture and the emulsion of milk, air and steam so to obtain a consistent and optimal froth formation.

Still another object of the present finding is to conceive a device which permits expelling the milk, air and steam emulsion obtained by the tubular element in which it formed without having losses of load, which may damage or reduce the froth formation, either qualitatively or quantitatively.

Still another object of the finding is to realise a device for the formation of froth in a milk-based drink which may be easily cleaned and which does not require a hard maintenance for this operation and which, moreover, has limited cost so to not affect the overall cost of the device on which it is applied.

Not the last object of the finding is to conceive a device which permits being oriented according to needs and in relation with the needs of the user without any problem.

The mentioned technical task and specified objects are substantially attained by a device for the formation of froth in a milk-based drink characterised in that it comprises a tubular element which may be fit in removable manner on a steam dispenser nozzle and cooperate with it to define an air intake line inside said tubular element, and scraping means of said air intake line which operate when said tubular element is fir and/or removed.

Another object of the present invention is a cleaning process of the air intake line of a device for the formation of froth in a milk-based drink comprising a tubular element which may be fit in movable manner on a steam dispenser nozzle and cooperate with it to define a intake line of air which may be emulsified with said steam and said milk, characterised in that it carries out the scraping of said air intake line by means of a protuberance mating with said intake line, and sliding with friction along it when said tubular element is fit and/or removed.

Further characteristics of the advantages of the finding will be clearer with the description of a preferred, but not exclusive embodiment of a device for the formation of froth in a milk-based drink, illustrated as an indicative and not limiting example in the drawings wherein:

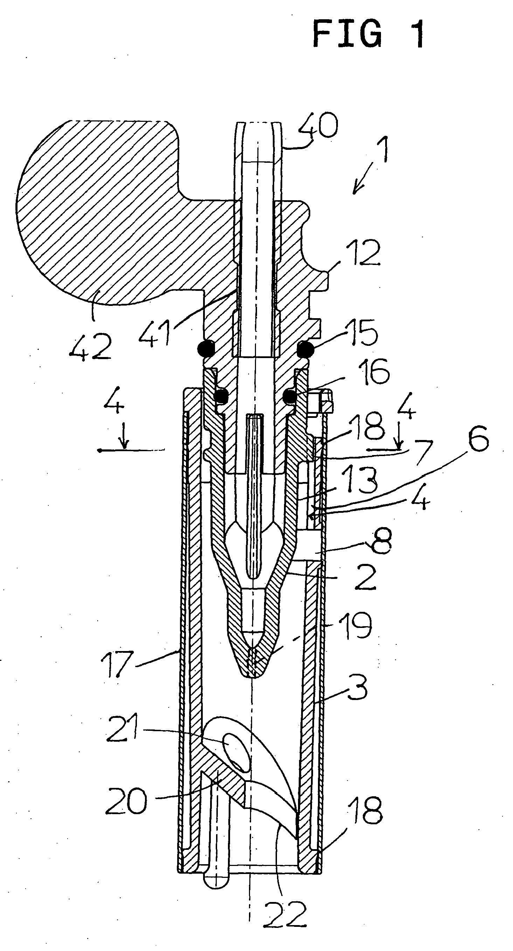

Figure 1 is a cross-sectioned, side elevation view of the device according to the finding, before the insertion of the tubular element on the steam dispenser nozzle;

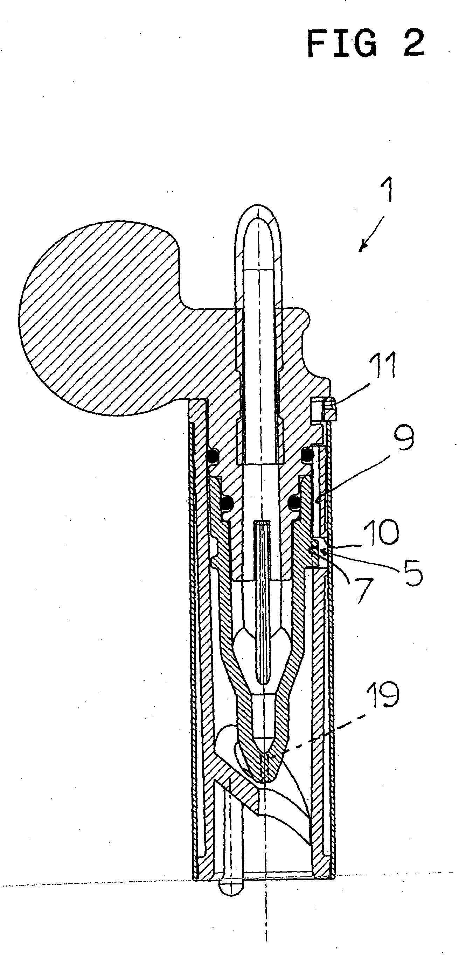

Figure 2 is a cross-sectioned, side elevation view of the device of figure 1 after the insertion of the tubular element, in position of release from the steam dispenser nozzle;

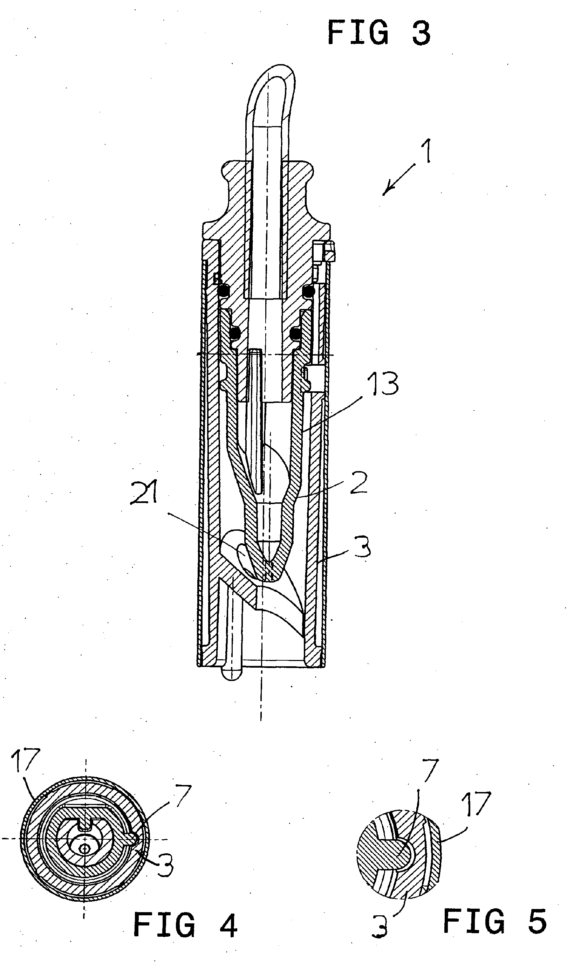

Figure 3 is a cross-sectioned, side elevation view of the device of the device of figure 1 after the insertion of the tubular element, in position of coupling with steam dispenser nozzle;
Figure 4 is a plan view of the device of figure 1, sectioned along the line 4-4; and
Figure 5 shows an enlargement of a detail of figure 4.

With reference to the above mentioned figures, the device for the formation of froth in a milk-based drink, indicated overall with the reference number 1, comprises a tubular element 3 which may be fit in removable manner on a steam dispenser nozzle 2 and cooperate with it to define a intake line 4 of air which may be emulsified with the steam and milk.

Inside the tubular element 3, a recess is formed, caused by the exit of the steam jet from the nozzle 2, which causes a drawing of air by the line 4.

The emulsion of milk, air and steam forms the desired froth, for example for the preparation of cappuccinos and the like.

The nozzle 2 in particular has a fixed part 12 and a movable terminal part 13.

The fixed part 12 of the nozzle 2 may be connected with a steam dispensing tap of a machine, in particular a coffee machine (not illustrated, through a preferably metallic tube 40.

Advantageously, the fixed part 12 of the nozzle 2, preferably in plastic, is over-moulded on the tube 40, such to form a monobloc with it.

In this manner, the need to have additional sealing members between the two parts is avoided.

In addition, the tube 40 has at least one clamping engagement 41 of the material of the fixed part 12 of the nozzle 2 in order to reinforce their union.

Naturally, when the device 1 is removed from the machine with the steam dispensing tap for cleaning, the fixed part 12 separates from the movable part 13 and consequently from the rest of the device 1.

The fixed part 12 of the nozzle 2 finally has a handle 42 for the orientation of the device 1.

The device 1 advantageously has scraping means 5 of the air intake line 4, which operate when the tubular element 3 is fit and/or removed.

The air intake line 4 comprises at least one gauged conduit 6, while the scraping means 5 comprise at least one protrusion 7 mating with the conduit 6.

The conduit 6 extends at one of its ends with a seat 8 in which the protrusion 7 is housed when the tubular element 3 is fit on the nozzle 2.

The tubular element 3 may be coupled to the nozzle 2 by simple translation.

Alternatively, when the protrusion 7 is housed in the seat 8, the tubular element 3 is rotating with respect to the nozzle 2, between a position of misalignment between the protrusion 7 and the conduit 6, at which the protrusion 7 realises a bayonet coupling between the tubular element 3 and the nozzle 2, and a position of alignment between the protrusion 7 and the conduit 6, at which the tubular element 3 is released from the nozzle 2.

In particular, the conduit 6 is obtained from a first recess 9 of the inner side surface of the tubular element 3, while the protrusion 7 is obtained on the outer side surface of the nozzle 2.

The seat 8 is obtained from a second recess 10 of the inner side surface of the second tubular element 3, having a depth greater than the height of the protrusion 7 in order to permit the passage of air.

In particular, the second recess 10 leads to the outer side surface of the tubular element 3.

Preferably, the width of the second recess 10 is greater than that of the protrusion 7.

The conduit 7 extends parallel to the axis of the second tubular element 3.

The conduit 7 leads to the summit of the second tubular element 3, where at least one radial groove 11 is present which places it in communication with the outside environment.

The apical position of the groove 11 for the outside air intake permits shortening the overall axial length of the device 1, so that cups of different height may be employed in the drink production.

The device 1 has at least a first seal and gauge gasket 15 of the passage section of the air feed line 4, interposed between the outer side surface of the nozzle 2 and the inner side surface of the tubular element 3, and at least a second seal gasket 16 of the steam between the fixed part 12 and the movable terminal part 13 of the nozzle 2.

Moreover, the nozzle 2 bears an outer cylindrical coating 17, to which it is coupled through snap members 18.

When the nozzle 2 is coupled to the tubular element 3, a passage is defined for the outside air in sequence through the groove 11, the interspace between the fixed part of the nozzle 2 and the cylindrical coating 17, conduit 6, seat 8 and the interspace between the movable part of the nozzle 2 and the tubular element 3.

Advantageously, in the tubular element 3 the mixing of milk and air occurs in a first zone which is different from a second zone in which the emulsion takes place of the milk, air and steam leaving the dispenser nozzle 2.

To this end, the tubular element 3 has, in proximity to the exit hole 19 of the nozzle 2, a sloped surface 20 which in turn has a first entrance passage 21 of the milk and a second exit passage 22 of the emulsion which formed with the milk, air and steam.

In particular, the quantity of intake milk, through the first entrance passage 21, substantially occurs with direction opposite to that of the air passage from the channel 6, so to cause an optimisation of the mixing of the two elements indeed determined by their origins with two substantially aligned and opposite directions. In fact, the first mixing zone of the air and milk is situated in proximity to the first passage 21 of the milk inside the tubular element 3, while the second zone of emulsion of the milk with the air and steam is near the second emulsion exit passage 22, thus to have its formation in a different zone from that of the mixing of milk and air.

Moreover, advantageously, the first and second passage 21 and 22 are positioned at different levels with respect to the axis of the tubular element 3.

In this manner, the realisation of the mixing and emulsifying of the various compounds do not interfere with each other, so that the single processes are optimised.

Additionally, the particular realised structure permits having the exit of the emulsion in axial direction with regards to the extension of the tubular element 3, and not opposed by any reduction of width of the exit passage 22, which may be realised with considerable width.

It should also be underlined that the movable part 3 of the nozzle 2 has a portion 31 of substantially small diameter with respect to it remaining portion, in order to increase the exit speed of the steam.

The process for the formation of the froth consists of making the steam pass entirely in the nozzle 2, to realise in this manner, entirely within the tubular element 3, a recess adapted to draw a quantity of air and milk inside the same.

Advantageously, the air and milk drawn inside the tubular element 3 are mixed in a first zone of the same, while the emulsion of the air/milk mixture thus obtained with the steam takes place in a second, different zone of the tubular element 3, which results closer to the exit of the same.

Lastly, advantageously, the emulsion of air, milk and steam thus obtained is discharged from the exit present in the tubular element in a direction substantially aligned with the axis of the tubular element and substantially opposed to the direction with which the milk is drawn inside the same for realising the mixing with air in the first zone.

After use, the tubular element 3 is removed from the nozzle 2 by means of a translational movement (or rototranslational if the tubular element is bayonet coupled to the nozzle 2), which unthreads it from the nozzle 2 and during the unthreading determines the scraping of the conduit 6 by the protuberance 7.

The same scraping action is applied when the tubular element 3 is fit on the nozzle 3 for the successive use of the device 1.

The device for the formation of froth in a milk-based drink thus conceived is susceptible to numerous modifications and variants, all within the scope of the inventive concept; moreover, all details may be substituted by technically equivalent elements.

In practice, the materials used, as well as their dimensions, may be of any type according to needs and the state of the art.

## Claims

1. Device for the formation of froth in a milk-based drink, **characterised in that** it comprises a tubular element which may be fit in a removable manner on a steam dispenser nozzle and cooperate with it to define an air intake line inside said tubular element, and scraping means of said air intake line which operate when said tubular element is fit and/or removed.

2. Device for the formation of froth in a milk-based drink according to claim 1, **characterised in that** said air intake line comprises at least one gauged conduit and said scraping means comprise at least one protrusion mating with said conduit.

3. Device for the formation of froth in a milk-based drink according to one or more of the previous claims, **characterised in that** said conduit extends at one of its ends with a seat in which said protrusion is housed when said tubular element is fit on said nozzle.

4. Device for the formation of froth in a milk-based drink according to one or more of the previous claims, **characterised in that** when said protrusion is housed in said seat, said tubular element is rotating with respect to said nozzle between a misalignment position between said protrusion and said conduit, at which said protrusion realises a bayonet coupling between said tubular element and said nozzle, and an alignment position between said protrusion and said conduit, at which said tubular element is released from said nozzle.

5. Device for the formation of froth in a milk-based drink according to one or more of the previous claims, **characterised in that** said conduit is defined by a first recess of the inner side surface of said tubular element and by the outer side surface of said nozzle.

6. Device for the formation of froth in a milk-based drink according to one or more of the previous claims, **characterised in that** said protrusion is obtained on the outer side surface of said nozzle.

7. Device for the formation of froth in a milk-based drink according to one or more of the previous claims, **characterised in that** said seat is obtained from a second recess on the inner side surface of said tubular element, having a depth greater than the height of said protrusion and width greater than that of said protrusion.

8. Device for the formation of froth in a milk-based drink according to one or more of the previous claims, **characterised in that** said conduit extends parallel to the axis of said tubular element.

9. Device for the formation of froth in a milk-based drink according to one or more of the previous claims, **characterised in that** said conduit leads to the summit of said tubular element, where a radial groove is present which places it in communication with the outside environment.

10. Device for the formation of froth in a milk-based drink according to one or more of the previous claims, **characterised in that** it has at least one seal and gauge gasket of the passage section of said air intake line, interposed between the outer side surface of said nozzle and the inner side surface of said tubular element.

11. Device for the formation of froth in a milk-based drink according to one or more of the previous claims, **characterised in that** it has at least a second seal gasket of the steam between a fixed part and a movable terminal part of said nozzle.

12. Device for the formation of froth in a milk-based drink according to one or more of the previous claims, **characterised in that** it has inside said tubular element a first zone in which the mixing of the milk and air takes place, different from a second zone in which the emulsion occurs of the milk, air and steam leaving said dispenser nozzle.

13. Device for the formation of froth in a milk-based drink according to one or more of the previous claims, **characterised in that** said tubular element has, in proximity to the exit hole of said nozzle, a sloped surface having a first entrance passage of the milk and a second exit passage of the emulsion which formed with milk, air and steam.

14. Device for the formation of froth in a milk-based drink according to one or more of the previous claims, **characterised in that** said first and second passage are positioned at different levels from the axis of said tubular element.

15. Device for the formation of froth in a milk-based drink, **characterised in that** it comprises a tubular element which may be fit in a removable manner on a steam dispenser nozzle and cooperate with it to define an air intake line inside said tubular element, said nozzle having a fixed part which may be connected through a tube to a steam dispensing tap, and a terminal part which may be moved from said fixed part, said fixed part being over-moulded on said tube so to form a monobloc with it.

16. Device according to the previous claim, **characterised in that** said tube has at least one squeezing for engagement of the material of said fixed part of said nozzle.

17. Cleaning process of the air intake line of a device for the formation of froth in a milk-based drink comprising a tubular element which may be fit in a movable manner on a steam dispenser nozzle and cooperate with it to define an intake line of air which may be emulsified with said steam and said milk, **characterised in that** it carries out the scraping of said air intake line by means of a protuberance, mating with said intake line, and sliding with friction along it when said tubular element is fit and/or removed.
